# EUROPÄISCHE PATENTSCHRIFT

(11) **EP 1 870 996 B1**
(45) Veröffentlichungstag und Bekanntmachung des Hinweises auf die Patenterteilung: **21.10.2009**
(21) Anmeldenummer: 06013068.9
(22) Anmeldetag: 24.06.2006
(51) Int. Cl.: H02M 7/48

(54) **Schaltung zum Einspeisen elektrischer Energie in ein elektrisches Versorgungsnetz**
Circuit for feeding electric energy in a electric utility grid
Circuit pour alimenter d'énergie electrique dans un reseau de distribution électrique

(43) Veröffentlichungstag der Anmeldung: 26.12.2007
(73) Patentinhaber: SMA Solar Technology AG, 34266 Niestetal (DE)
(72) Erfinder: Falk, Andreas, 34131 Kassel (DE)
(74) Vertreter: Walther, Walther & Hinz GbR

(56) Entgegenhaltungen:
- WO-A-01/86797
- GB-A- 2 386 208
- JP-A- 7 015 971
- US-B1- 6 370 050

## Beschreibung

Die Erfindung betrifft eine Schaltungseinrichtung zum Einspeisen elektrischer Energie aus einer Energiequelle mit variabler Quellenspannung in ein elektrisches Energieversorgungsnetz (EVN) und mit einem Transformator mit einer Primär- und Sekundärseite, der eingangsseitig der Energiequelle und ausgangsseitig dem Energieversorgungsnetz zugeordnet ist.

Viele Quellen für elektrische Energie, wie Solargeneratoren, Windenergieanlagen mit Permanentmagnet-Generator, drehzahlvariable Verbrennungsmotoren, Brennstoffzellen, Batterien und dergleichen weisen häufig eine stark variierende Spannung und eine hohe Innenimpedanz auf. Derartige Energiequellen können eine Gleichspannung oder eine ein- oder dreiphasige Wechselspannung mit variabler Frequenz aufweisen.

Um elektrische Energie aus solchen Quellen in ein Energieversorgungsnetz einzuspeisen, sind Anpasseinrichtungen, wie zum Beispiel ein Solarwechselrichter, bekannt. Das Energieversorgungsnetz kann sowohl ein öffentliches Energieversorgungsnetz als auch ein Inselnetz für einen oder mehrere wenige Verbraucher sein.

Eine solche bekannte Anpasseinrichtung hat die Aufgabe einer Anpassung der Spannung und der Frequenz an die Verhältnisse im Energieversorgungsnetz, in das eingespeist werden soll. Weiterhin dient die Einrichtung zur Herstellung eines möglichst optimalen Betriebspunktes für die Energiequelle, so dass ein maximaler Energieertrag erzielt wird. Dies ist auch unter dem Begriff Maximum Power Point Regelung bzw. MPP-Regelung bekannt.

In vielen Fällen ist aufgrund technischer Erfordernisse oder aufgrund von länderspezifischen Regeln und Normen eine galvanische Trennung zwischen der Energiequelle und dem Versorgungsnetz erforderlich.

Bekannte Anpasseinrichtungen mit galvanischer Trennung haben jedoch einen deutlich schlechteren Wirkungsgrad als solche ohne galvanische Trennung.

Bekannt sind Schaltungsanordnungen mit einem NF-Transformator (Frequenz gleich der Frequenz im EVN). Der Energiequelle mit hohem Innenwiderstand wird ein einphasiger oder ein dreiphasiger Wechselrichter nachgeschaltet. Wenn die Energiequelle eine Gleichspannungsquelle wie z. B. ein Solargenerator oder eine Brennstoffzelle ist, wird der Wechselrichter direkt angeschlossen. Bei Wechselspannungsquellen, wie Wind oder Wasserkraftanlage mit Permanentmagnet-Generator, wird noch ein Gleichrichter zwischen-geschaltet. Der Wechselrichter ist als H-Brücke bei einphasigen Anlagen oder als Dreiphasenbrücke bei dreiphasigen Anlagen ausgeführt. Dem Wechselrichter wird ein Sinusfilter und ein Transformator nachgeschaltet. An die Transformatorsekundärseite ist das Energieversorgungsnetz angeschlossen.

Bekannt sind auch Einrichtungen mit einem HF-Transformator (Frequenz höher als im EVN, typischerweise 1 KHz bis 1 MHz). Der Energiequelle mit hohem Innenwiderstand wird ein Hochfrequenz-Wechselrichter (HF-Wechselrichter) nachgeschaltet. Wenn die Energiequelle eine Gleichspannungsquelle wie ein Solargenerator oder eine Brennstoffzelle ist, wird der HF-Wechselrichter direkt angeschlossen. Bei Wechselspannungsquellen, wie z. B. Wind oder Wasserkraftanlagen, wird ein Gleichrichter zwischengeschaltet.

Der HF-Wechselrichter erzeugt eine hochfrequente Wechselspannung, die über den HF-Trafo auf die Sekundärseite transformiert wird. Dort wird die Wechselspannung durch einen Gleichrichter gleichgerichtet. Der Gleichrichter speist einen Gleichspannungszwischenkreis. Dem Gleichspannungszwischenkreis ist ein NF-Wechselrichter als H-Brücke bei einphasigen Anlagen oder als Dreiphasenbrücke bei dreiphasigen Anlagen nachgeschaltet. Über einen Sinusfilter wird das Versorgungsnetz mit dem NF-Wechselrichter verbunden.

Weil die Energiequelle in den hier beschriebenen Fällen eine stark schwankende Spannung aufweist, muss oft noch ein Anpasssteller zwischen der Energiequelle und dem HF-Wechselrichter eingebaut werden, um den Gleichspannungszwischenkreis auf der Sekundärseite stabil zu halten. Dies ist insbesondere dann der Fall, wenn der HF-Wechselrichter als Resonanzumrichter ausgeführt ist. Resonanzumrichter besitzen zwar einen hohen Wirkungsgrad, können aber nicht zur Spannungsanpassung genutzt werden. Ein solcher Resonanzumrichter ist aus der EP 1 458084 A2 bekannt.

Wird der HF-Wechselrichter als hart schaltender Wechselrichter ausgeführt, kann er zu der erforderlichen Spannungsanpassung genutzt werden, weist aber einen schlechten Wirkungsgrad auf.

Bekannt sind auch solche Einrichtungen mit einem NF-Transformator. Das Transformatorübersetzungsverhältnis wird so gewählt, dass bei einer Spannung an der Energiequelle, die bei einem Solargenerator bei maximaler Einstrahlung und hoher Umgebungstemperatur und maximaler Netzspannung auftritt, noch Energie in ein EVN eingespeist werden kann. Der Strom auf der Primärseite des Transformators ist jedoch sehr groß. Halbleiterschalter des NF-Wechselrichters müssen für diese hohen Ströme und gleichzeitig für die maximale Spannung der Energiequelle ausgelegt werden. Bedingt durch die Schaltverluste in den Halbleiterschaltern des NF-Wechselrichters steigen die Verluste. Außerdem ergeben sich weitere Nachteile. Der NF-Transformator ist groß und schwer. Es ergeben sich hohe Ströme auf der Transformatorprimärseite, weil das Übersetzungsverhältnis auf den Fall minimaler Spannung an der Energiequelle und maximaler Spannung im Energieversorgungsnetz angepasst sein muss. Zudem nehmen die Halbleiterverluste mit zunehmender Spannung an der Energiequelle zu.

Bekannt sind auch Schaltungseinrichtungen dieser Art mit einem HF-Transformator. Hierbei wird zwischen Schaltungen mit resonant schaltendem HF-Wechselrichter und hart schaltendem HF-Wechselrichter unterschieden.

Bei Schaltungen mit hart schaltenden HF-Wechselrichtern wird das Transformatorübersetzungsverhältnis des HF-Transformators so gewählt, dass zum Beispiel bei einem Solargenerator bei maximaler Einstrahlung und hoher Umgebungstemperatur und maximaler Netzspannung noch Energie in das Netz eingespeist werden kann. Damit ist der Strom auf der Primärseite des HF-Transformators jedoch ebenfalls sehr groß. Die Halbleiterschalter des HF-Wechselrichters müssen für diese hohen Ströme und gleichzeitig für die maximale Spannung der Energiequelle ausgelegt werden. Bedingt durch die Schaltverluste in den Halbleiterschaltern des HF-Wechselrichters steigen die Verluste mit zunehmender Spannung an der Energiequelle auch hier an. Nachteilig sind hohe Ströme auf der Primärseite des HF-Transformators, erhebliche Halbleiterverluste aufgrund des hart schaltenden Betriebs, weil in diesem Betriebspunkt große Schaltverluste in den Leistungshalbleitern entstehen, sowie ein geringer Wirkungsgrad der Anpasseinrichtung.

Bei einem resonant schaltenden HF-Wechselrichter ist, um eine stabile Spannung im Gleichspannungszwischenkreis nach dem Gleichrichter zur Verfügung zu stellen, eine zusätzliche Anpassstufe vorgesehen. Diese Anpassstufe wird vor dem HF-Wechselrichter oder nach der HF-Gleichrichtung geschaltet. Sie ist z. B. als Hoch- oder als Tiefsetzsteller ausgeführt. Eine solche Anpassstufe erfordert jedoch zusätzliche Kosten und benötigt zusätzlichen Platz. Zudem werden in einer solchen Stufe zusätzliche Verluste verursacht. Diese Variante benötigt also einen zusätzlichen Anpasssteller, wobei der Wirkungsgrad der Anpasseinrichtung durch einen solchen zusätzlichen Steller reduziert wird.

Aus der JP 07 015 971 A ist eine Schaltungseinrichtung für Solargeneratoren mit ihren typischen Solarzellenkennlinien bekannt. Die Schaltungen weisen einen primärseitigen oder sekundärseitigen Umschalter an einem Transformator auf.

In einer Schaltungsvariante der JP 07 015 971A folgt einer primärseitigen Brücke ausgangsseitig der Transformator. Über einen Schalter bzw. über ein Umschaltrelais kann die Windungszahl der Trafo-Primärseite verändert werden. Sekundärseitig folgt dem Trafo eine Gleichrichterbrücke mit zwei Zweigen. Diese Schaltung erlaubt eine Veränderung der Transformatorspannung.

In einer weiteren Schaltungsvariante der JP 07 015 971 A erfolgt eine primärseitige Umschaltung an dem Netztrafo. Eine Drossel 36 und ein Kondensator 37 bilden einen Netzfilter.

Bei dieser Schaltungseinrichtung wird eine Gleichspannung der Gleichspannungsquelle bzw. des Solargenerators durch eine Brückenschaltung in eine Wechselspannung umgewandelt und durch einen Transformator auf die Sekundärseite transformiert. Auf der Sekundärseite befindet sich ein Gleichrichter, dem über eine Zwischenkreisdrossel eine Brückenschaltung zur Speisung des Wechselstromnetzes nachgeschaltet ist. Der Transformator hat sekundärseitig beispielsweise einen dritten Abgriff. Transistoren ermöglichen bei Durchschalten ein Zuschalten eines dritten Zweiges mit dem Ziel der Spannungserhöhung auf der Sekundärseite. Das Zuschalten kann ohne Betriebsunterbrechung erfolgen.

Aus der JP 07 015 971A ist also ein Wechselrichter zum Umwandeln von Gleichspannung aus einer Solarzelle in eine Wechselspannung oder in eine Gleichspannung und sowie ein Transformator für eine solche Schaltung mit mehreren zuschaltbaren Transformatorabgriffen bekannt.

Durch PWM-Modulation einer Brücke ist eine regelbare Belastung auf der Primärseite vorhanden, um die Spannung der Energiequelle zu begrenzen. Diese Einrichtung ist derart ausgeführt, dass durch den oder durch die Transformatoren eine Spannungsanpassung zwischen der Energiequelle und dem Versorgungsnetz erfolgt.

Der Erfindung liegt die Aufgabe zugrunde, eine Schaltungseinrichtung der gattungsgemäßen Art mit hohem Wirkungsgrad bereitzustellen, die eine galvanische Trennung aufweist.

Diese Aufgabe wird erfindungsgemäß durch die Merkmale der unabhängigen Ansprüche gelöst.

Durch die erfindungsgemäße Schaltungsanordnung ist es möglich, ohne eine zusätzliche Anpassschaltung mit zusätzlichen Halbleitern einen hohen Wirkungsgrad der Energiequelle zu erreichen. Durch die Veränderung des Übersetzungsverhältnisses kann eine Spannungsanpassung bei geringeren Strömen in den primärseitigen Halbleiter erzielt werden. Hierbei wird der Strom auf der Transformatorprimärseite im Gegensatz zum Stand der Technik nicht dadurch vorgegeben, dass das Übersetzungsverhältnis des Transformators auf die minimale Spannung der Energiequelle ausgelegt wird. Dadurch sinken die Umwandetungsverluste für Betriebszustände, bei denen die Eingangsspannung über der nominalen Eingangsspannung liegt

Durch die erfindungsgemäße Schaltungseinrichtung wird eine Anpasseinrichtung mit galvanischer Trennung geschaffen, so dass einerseits Normen bzw. Sicherheitsanforderungen bei der Einspeisung entsprechend den gültigen Regeln der Technik erfüllt werden. Andererseits wird aber auch ein hoher Wirkungsgrad erzielt, wodurch eine hohe Wirtschaftlichkeit der Anpasseinrichtung gegeben ist und die Entwärmung der Anlage erleichtert wird.

Durch den Transformator mit mehreren Abgriffen oder mehreren Transformatoren mit mehreren Übersetzungsverhältnissen kann im Prinzip eine Spannungsanpassung zwischen der Energiequelle und dem Versorgungsnetz erreicht werden.

Durch eine solche Umschaltung des Transformatorübersetzungsverhältnisses kann in einfacher Weise auf eine zusätzliche leistungselektronische Anpassstufe verzichtet werden und es wird erreicht, dass der Wechselrichter in einem günstigen Arbeitspunkt betrieben werden kann, so dass er weniger Umwandlungsverluste verursacht.

Es ist eine regelbare Belastung auf der Primärseite vorgesehen, um die Spannung der Energiequelle zu begrenzen, während von einem Transformatorabgriff auf einen anderen Transformatorabgriff umgeschaltet wird. Während der Umschaltung zwischen den Abgriffen bzw. zwischen den Transformatoren ergibt sich eine kurze Zeitspanne, während der keine Energie übertragen werden kann. Diese Maßnahme dient dazu, die Spannung der Energiequelle während der Umschaltung konstant zu halten.

Die Spannung der Energiequelle während der Umschaltung ändert sich nicht oder nur in dem gewünschten Umfang, weil die regelbare Belastung als Widerstandschopper oder Bremschopper ausgeführt ist.

Zweckmäßigerweise sind zur Umschaltung zwischen den verschiedenen Transformatorabgriffen des Transformators oder zwischen den einzelnen Transformatorabgriffen der Transformatoren Relais, Schütze, Schalter, Trenner oder Halbleiterschaltern vorgesehen, so dass eine verlustarme automatische Umschaltung bewirkt werden kann.

Besonders günstig wirkt sich die Erfindung aus, wenn die Innenimpedanz der Energiequelle relativ hoch ist, wie bei einem Solargenerator. Mögliche Einsatzgebiete der Erfindung bieten sich auch beim Betrieb einer Brennstoffzelle, einer Batterie, einem Windkraftwerk mit permanentmagnetischem Generator, einer Verbrennungskraftmaschine mit permanentmagnetischem Generator oder einem Wasserkraftwerk mit permanentmagnetischem Generator.

In einer weiteren vorteilhaften Ausführung der Erfindung ist jeder Transformator ein NF-Transformator, dessen Betriebsfrequenz gleich der Frequenz des Energieversorgungsnetzes ist.

Das Transformatorübersetzungsverhältnis muss bei einem Solargenerator so gewählt werden, dass bei maximaler Einstrahlung und hoher Umgebungstemperatur eine maximale Netzspannung noch eingespeist werden kann.

Vorteilhaft ist es auch, wenn jeder Transformator als HF-Transformator ausgeführt ist, dessen Frequenz größer als die Frequenz des Energieversorgungsnetzes ist.

Besonders vorteilhaft ist es, wenn den Transformatoren ein Wechselrichter vorgeschaltet ist, der Halbleiterschalter, insbesondere MOS Transistoren, IGBTs, GTOs oder Thyristoren umfasst. Die Schaltungseinrichtung ist so ausgeführt, dass der Transformator mit mehreren Abgriffen ausgeführt ist oder mehreren Transformatoren mit unterschiedlichen Übersetzungsverhältnissen verwendet werden, um eine grobe Spannungsanpassung zwischen der Energiequelle und dem Versorgungsnetz zu erreichen. Die Feinanpassung wird durch den NF-Wechselrichter erreicht, der ein ein- oder dreiphasiger Wechselrichter sein kann.

Vorteilhaft kann der Wechselrichter mit einem Resonanzkondensator, mit einem als HF-Transformator ausgeführten Transformator und mit einer Gleichrichterschaltung ausgeführt sein und so einen Resonanzumrichter bilden, wobei die Eigenfrequenz, die der Resonanzkondensator mit der Streuinduktivität des Transformators bildet, größer oder kleiner der Schaltfrequenz des Wechselrichters ist. Dadurch können die Schaltverluste in den Halbleiterschaltern des Resonanzumrichters gegenüber einem hart schaltenden Umrichter stark vermindert werden.

Weitere vorteilhafte Ausgestaltungen der Erfindung sind in den Unteransprüchen gekennzeichnet.

Ein Ausführungsbeispiel der Erfindung wird anhand der Zeichnungen näher erläutert, wobei weitere vorteilhafte Weiterbildungen der Erfindung und Vorteile derselben beschrieben sind.

Es zeigen:
- Fig. 1: eine Darstellung des Prinzips einer erfindungsgemäßen Schaltungseinrichtung mit einem Transformator,
- Fig. 2: eine Darstellung des Prinzips einer erfindungsgemäßen Schaltungseinrichtung mit mehreren Transformatoren,
- Fig. 3: eine erste Ausführungsform der Schaltungseinrichtung,
- Fig. 4: Spannungsverläufe und andere Signale während eines Umschaltevorgangs,
- Fig. 5: eine zweite Ausführungsform der Schaltungseinrichtung,
- Fig. 6: eine dritte Ausführungsform der Schaltungseinrichtung,
- Fig. 7: eine vierte Ausführungsform der Schaltungseinrichtung,
- Fig. 8: eine fünfte Ausführungsform der Schaltungseinrichtung,
- Fig. 9: zeigt eine weitere Ausführungsform der Schaltungseinrichtung für eine regelbare Belastung.

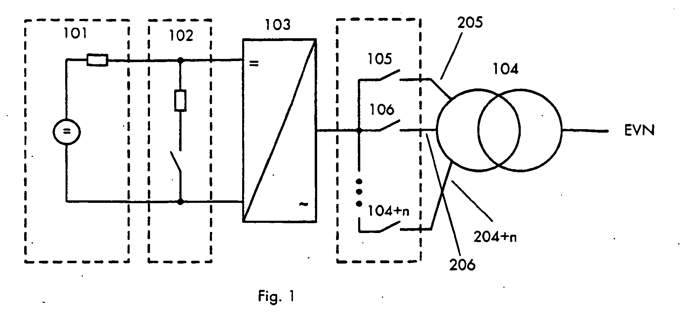

Fig. 1 zeigt das Prinzip einer erfindungsgemäßen Schaltungseinrichtung bzw. einer Anpasseinrichtung. Diese dient zum Einspeisen elektrischer Energie aus einer Energiequelle 101 mit variabler Quellenspannung in ein elektrisches Energieversorgungsnetz EVN. Die Energiequelle ist beispielsweise ein Solar- oder ein Photovoltaikgenerator. Die Schaltungseinrichtung weist einen Transformator 104 mit einer Primär- und Sekundärseite auf. Eingangsseitig ist dieser der Energiequelle 101 und ausgangsseitig dem Energieversorgungsnetz EVN zugeordnet. Wie Fig. 1 veranschaulicht, umfasst der Transformator 104 mehrere Abgriffe 205, 206, 204 + n. Das Übersetzungsverhältnis der Abgriffe 205, 206, 204 + n ist unterschiedlich.

Die Transformatorabgriffe 205, 206, 204 + n sind mit Schaltelementen 105, 106, 104 + n umschaltbar ausgebildet, um das Transformator-Übersetzungsverhältnis zu verändern. Dadurch kann eine grobe Spannungsanpassung zwischen der Energiequelle 101 und dem Versorgungsnetz erreicht werden. Eine Feinanpassung kann z. B. durch einen einphasigen oder dreiphasigen Wechselrichter 103 erreicht werden, der direkt mit den Schaltelementen 105, 106, 104 + n verbunden ist.

Während der Umschaltung zwischen den Abgriffen 205, 206, 204 + n ,die beispielsweise mit Schützen oder Relais vorgenommen werden kann, ergibt sich eine kurze Zeitpanne, während der keine Energie übertragen werden kann. Um die Spannung der Energiequelle 101 während der Umschaltung konstant zu halten, wird sie während dieser Umschaltzeit durch insbesondere eine regelbare Belastung 102 belastet. Die Widerstandslast wird vorzugsweise mit Hilfe eines Widerstandschoppers so eingestellt, dass die Spannung der Energiequelle 101 sich während der Umschaltung nicht oder nur in einem gewünschten Umfang ändert.

Durch eine solche Umschaltung des Transformatorübersetzungsverhältnises kann auf eine zusätzliche leistungselektronische Anpassstufe verzichtet werden oder aber es wird erreicht, dass der Wechselrichter in einem günstigen Arbeitspunkt betrieben werden kann, so dass dieser weniger Umwandlungsverluste verursacht.

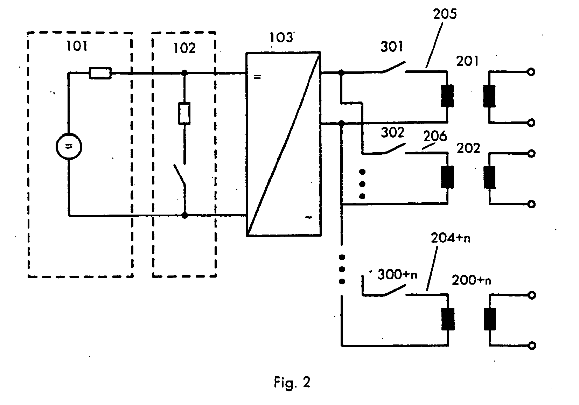

In Fig. 2 wird eine erfindungsgemäße Alternative mit mehreren Transformatoren 201, 202 und 200 +n mit unterschiedlichen Übersetzungsverhältnissen dargestellt. Jeder Transformator hat einen Abgriff, der mit einem Schaltelement 301, 302, 300 +n verbunden ist. Je nachdem, welches Schaltelement 301, 302, 300 +n geschaltet ist, ergibt sich ein bestimmtes Übersetzungsverhältnis.

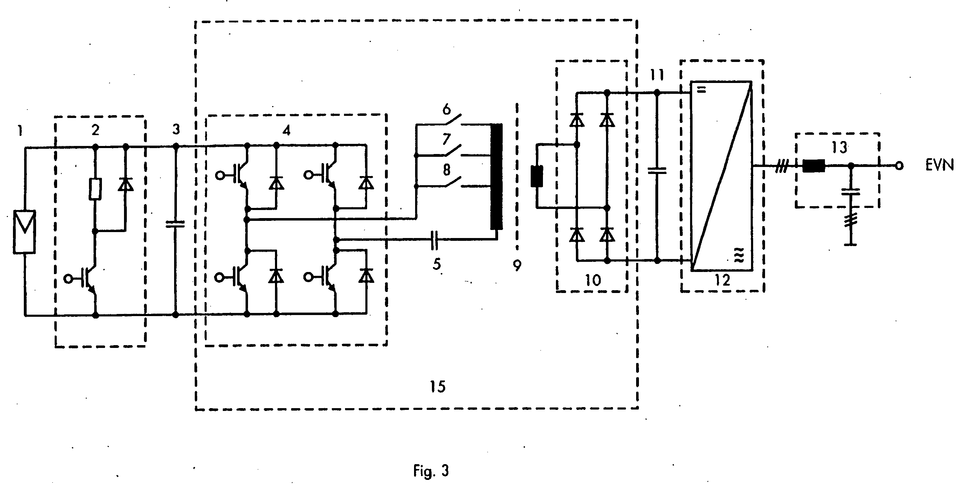

Eine erste Ausführungsform der Erfindung ist in Fig. 3 dargestellt. Als DC-Quelle mit hohem Innenwiderstand ist ein Solargenerator 1 vorgesehen. Die elektrische Energie des Generators 1 soll in ein Drehstromnetz (Energieversorgungsnetz EVN) gespeist werden. Dem ist eine Vollbrückenschaltung 4 mit vier Halbleiterschaltern nachgeschaltet. Parallel zu der Vollbrückenschaltung 4 ist ein Eingangskondensator 3 und die als Widerstandschopper ausgeführte Belastung 2 vorgesehen, wobei der Eingangskondensator 3 zwischen der Belastung und der Vollbrückenschaltung plaziert ist.

Die Vollbrückenschaltung 4 ist mit dem Transformator 9 primärseitig über einen Resonanzkondensator 5 verbunden. Eine Gleichrichterschaltung 10 ist dem Transformator 9 nachgeschaltet, also sekundärseitig angeordnet. Die Streuinduktivität des Transformators 9 bildet mit dem Kondensator 5 eine Resonanzfrequenz, die größer als die Schaltfrequenz der Vollbrückenschaltung 4 ist. Dadurch wird eine Resonanzumrichterschaltung 15 gebildet.

Mit Schützen 6, 7 und 8, die den einzelnen Transformatorabgriffen zugeordnet sind, kann das Übersetzungsverhältnis des Transformators 9 eingestellt werden. Genau eines der Schütze 6, 7 oder 8 ist bei Betrieb der Schaltung geschlossen.

In einer anderen Ausführungsvariante könnten sich diese Schütze auch auf der Sekundärseite des Transformators befinden.

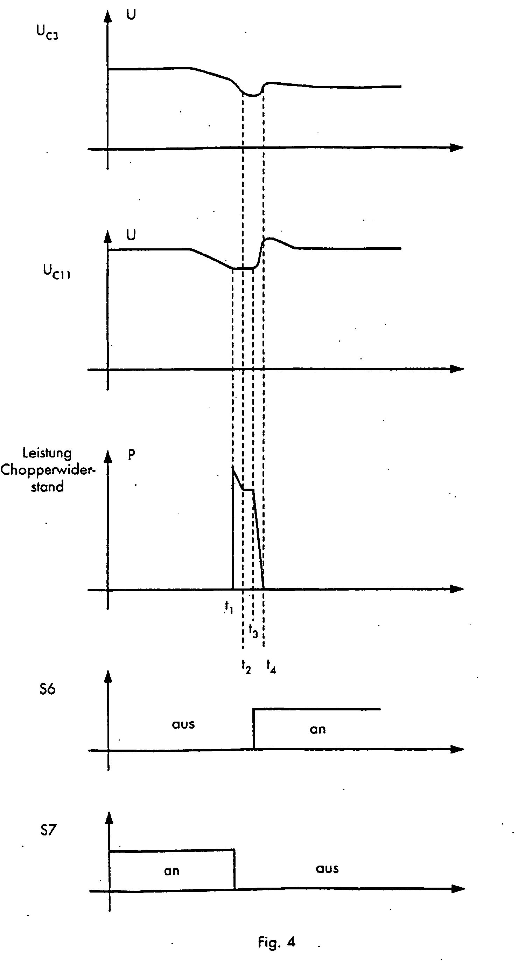

Dem Resonanzumrichter 15 ist vorzugsweise ein Zwischenkreiskondensator 11 und ein Netzumrichter 12 nachgeschaltet. Der Netzumrichter 12 wird über den Netzfilter 13 mit dem Energieversorgungsnetz EVN verbunden. In Fig. 4 ist ein typischer Umschaltvorgang dargestellt.

Es soll der Fall betrachtet werden, dass die MPP-Spannung des Solargenerators langsam absinkt, weil z. B. die Umgebungstemperatur zunimmt. In diesem Beispiel ist zunächst Schütz 7 geschlossen.

Bedingt durch die Schaltungsanordnung mit dem Resonanzumrichter 15 ist die Eingangsspannung am Kondensator 3 mit dem Zwischenkreiskondensator 11 hart gekoppelt. Das heißt, unter Last verhalten sich beide Spannungen gemäß dem Transformatorübersetzungsverhältnis proportional zueinander.

Sinkt nun die Spannung am Kondensator 11 so stark ab, dass die Grenze, bei der noch Netzeinspeisung möglich ist, erreicht wird, so muss das Transformatorübersetzungsverhältnis umgeschaltet werden.

Der Schaltvorgang wird in Fig. 4 veranschaulicht. Hier sind die Spannungen am Kondensator 3, am Kondensator 11, die Leistung P am Chopperwiderstand sowie der Schaltzustand des Schützes 6 (S6) bzw. des Schützes 7 (S7) dargestellt.

Zunächst wird der Widerstandschopper bzw. die Belastung 2 aktiviert und im weiteren Verlauf so geregelt, dass die Spannung am Kondensator 3 stabil bleibt. Zum Zeitpunkt t1 werden die Pulse des Resonanzumrichters 15 und des Netzumrichters 12 gesperrt. Dann wird Schütz 7 geöffnet. Danach wird Schütz 6 geschlossen.

Zwischen t1 und t3 wird über den Widerstandschopper die Spannung am Kondansator 3 so weit abgesenkt, dass sie, berechnet mit dem neuen Trafoübersetzungsverhältnis, proportional der aktuellen Zwischenkreisspannung am Kondensator 11 ist. Zwischen t1 und t2 sinkt dabei die Schopperleistung etwas ab, weil der Solargenerator nicht mehr im MPP (Maximum Power Point) betrieben wird.

Bei t3 werden die Pulse des Resonanzumrichters und des Netzumrichters freigegeben. Zwischen t3 und t4 sinkt die Leistung am Widerstandschopper ab. Die eingespeiste Leistung nimmt entsprechend zu. Der Netzumrichter wird wieder so geregelt, dass der MPP erneut erreicht wird. Dadurch steigt nun die Spannung am Kondensator 11 auf einen höheren Wert als vor dem Umschaltvorgang an. Im weiteren Verlauf dieses Beispiels steigt die Temperatur am Solargenerator weiter an, so dass die MPP-Spannung weiter absinkt, bis sie einen Endwert erreicht. Dadurch sinkt auch die Spannung am Kondensator 11 entsprechend. Ein weiterer Umschaltvorgang ist aber nicht erforderlich, da die Spannung am Kondensator 11 hoch genug ist, um eine Netzeinspeisung zu ermöglichen.

Ein vorteilhaftes Merkmal der Erfindung ist die Regelung der Belastung 102 während der Umschaltphasen. Dadurch, dass bei resonant schaltenden Topologien, die Zwischenkreisspannung am Kondensator 11 proportional der Eingangsspannung ist, ist es zweckmäßig, nach einer Umschaltung die Eingangsspannung durch die Regelung der Belastung so einzustellen, dass sie der momentanen Spannung am Kondensator 11 multipliziert mit dem Übersetzungsverhältnis des Transformators entspricht. Dann kann der Resonanzumrichter 15 ohne zeitraubendes Anrampen sofort wieder mit vollem Pulsverhältnis eingeschaltet werden, ohne dass unerwünscht große Ausgleichsströme fließen.

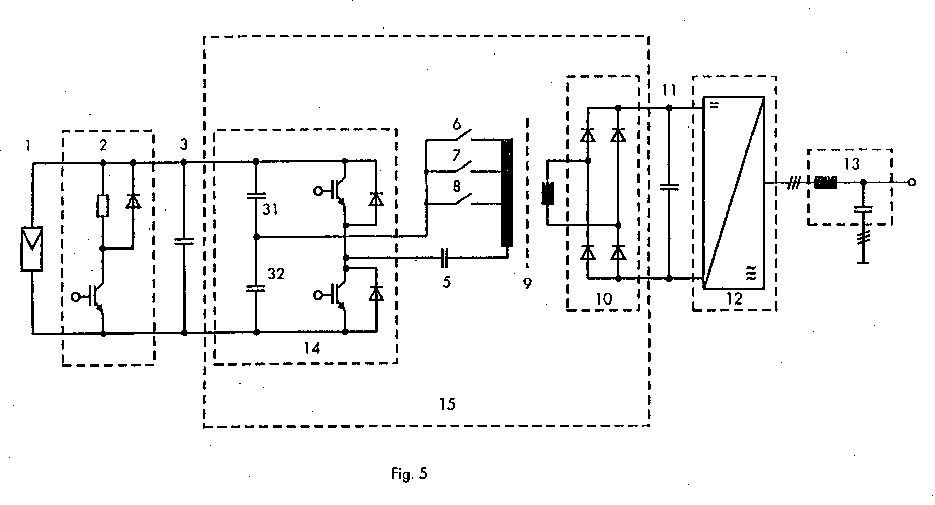

Die regelbare Belastung 102 kann vor dem Einschalten der Wechselrichter 4 bzw. 14, 24 oder 34 (Fig. 5, Fig. 8, Fig. 6) dazu verwendet werden, die Eingangsspannung auf einen Wert abzusenken, der einen Betrieb des Wechselrichters 4 (14, 24 oder 34) ermöglicht, ohne dass die Anforderungen an die Spannungsfestigkeit der Halbleiterschalter in diesen Wechselrichtern überschritten wird. Dadurch kann ein Wechselrichter mit Halbleiterschaltern ausgerüstet werden, die zwar für den Betrieb im MPP nicht aber für den Betrieb bei Leerlauf der Eingangsspannungsquelle geeignet sind. Dadurch wiederum können Halbleiter mit niedrigerer Sperrspannung und damit günstigen Verlusten verwendet werden.

Eine zweite Ausführungsvariante der Erfindung ist in Fig. 5 dargestellt. Der Resonanzumrichter 15 ist hier mit einer Halbbrückenschaltung 14 ausgeführt. Dabei kann der Kondensator 5 als Resonanzkondensator genutzt werden. Möglich ist auch, dass die Kondensatoren 31, 32 als Resonanzkondensatoren genutzt werden. Der Kondensator 5 kann auch ganz entfallen und durch eine Brücke ersetzt werden.

Der Wechselrichter 14 bildet mit dem Resonanzkondensator 5, mit den zusätzlich angeordneten Kondensatoren 31 und 32 sowie dem HF-Transformator 9 und der Gleichrichterschaltung 10 einen Resonanzumrichter. Die Eigenfrequenz, die die Kondensatoren 5, 31 und 32 mit der Streuinduktivität des Trafos bilden, ist größer oder kleiner der Schaltfrequenz des Wechselrichters 14. Dadurch sind die Schaltverluste in den Halbleiterschaltern des Resonanzumrichters 15 gegenüber einem hart schaltenden Umrichter stark vermindert.

Die erfindungsgemäße Funktion der Schaltung gemäß Fig. 3 entspricht der in Fig. 1 und 2, so dass diese nicht näher beschrieben wird.

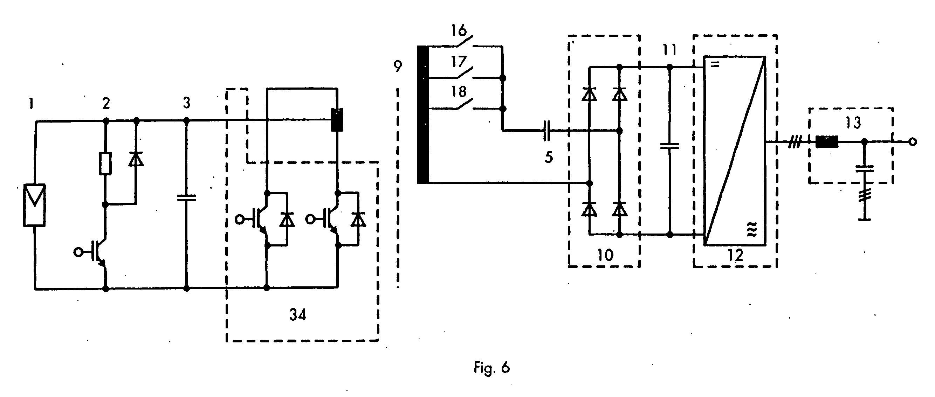

Eine dritte Ausführungsvariante der Erfindung ist in Fig. 6 dargestellt. Der Resonanzumrichter ist hier primärseitig als Mittelpunktschaltung 34 ausgeführt, wobei zwei Halbleiterschalter eingesetzt werden. Der Resonanzkondensator 5 ist auf der Sekundärseite angeordnet. Auch die Schaltelemente 16, 17, 18 befinden sich auf der Sekundärseite.

Bei dieser Variante werden die Leistungsverluste auf der Primärseite auf ein Minimum reduziert. Dafür müssen Halbleiter mit einer höheren Sperrfähigkeit eingesetzt werden.

Der Wechselrichter 34, der Resonanzkondensator 5, ein HF-Transformator 9 und eine Gleichrichterschaltung 10 bilden einen Resonanzumrichter 15. Die Eigenfrequenz, die der Resonanzkondensator mit der Streuinduktivität des Trafos bildet, ist größer oder kleiner der Schaltfrequenz des Wechselrichters 34. Dadurch sind auch hier die Schaltverluste in den Halbleiterschaltern des Resonanzumrichters 15 gegenüber einem hart schaltenden Umrichter stark vermindert.

Die erfindungsgemäße Funktion der Schaltung, die anhand der Figuren 1 und 2 beschrieben worden ist, ändert sich nicht, so dass diese nicht näher beschrieben wird.

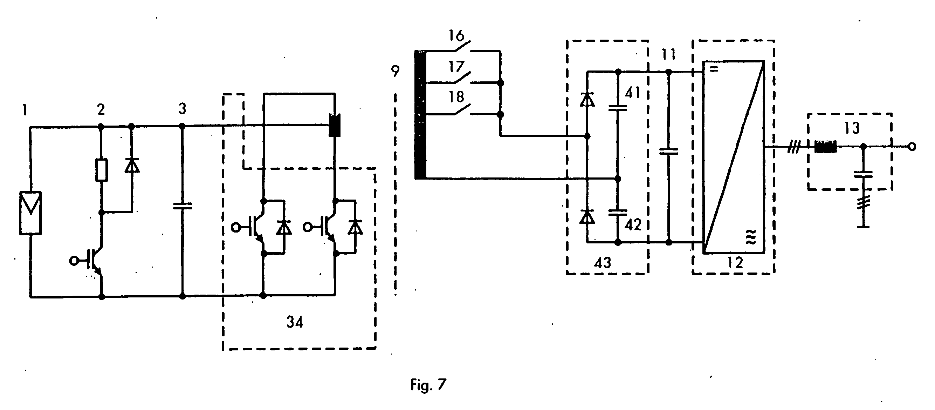

Eine vierte Ausführungsvariante der Erfindung ist in Fig. 7 dargestellt. Der Resonanzumrichter 15 ist hier primärseitig als Mittelpunktschaltung 34 mit zwei Halbleiterschältem ausgeführt. Eingesetzt werden Resonanzkondensatoren 41, 42, die als Bestandteil einer Halbbrückenschaltung 43 auf der Sekundärseite angeordnet sind. Auch die Umschalter 16, 17, 18 befinden sich auf der Sekundärseite.

In dieser Ausführungsvariante werden die Verluste auf der Primärseite auf ein Minimum reduziert. Dafür müssen Halbleiter mit einer höheren Sperrfähigkeit eingesetzt werden.

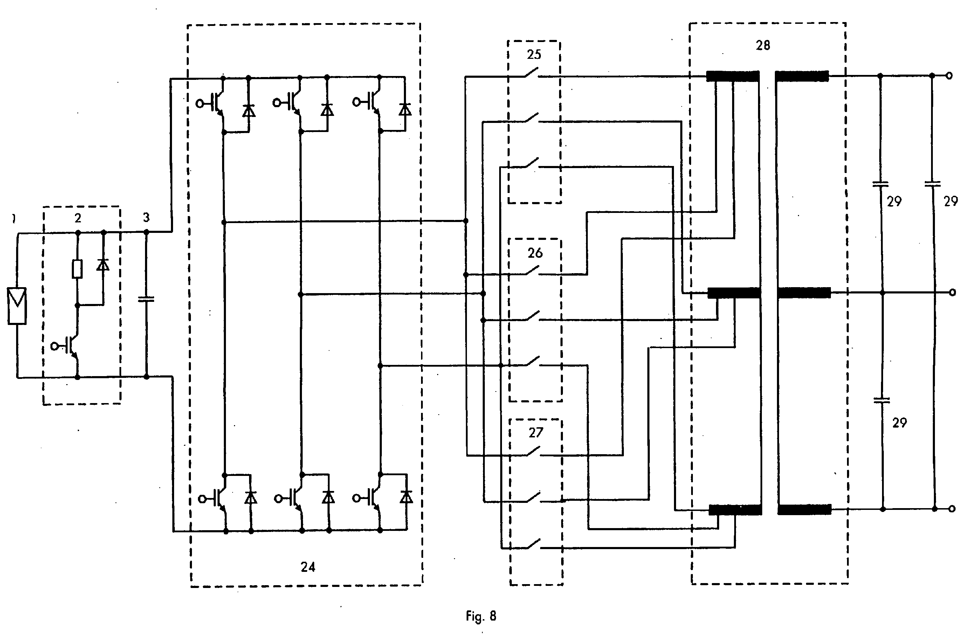

Eine fünfte Ausführungsvariante der Erfindung ist in Fig. 8 dargestellt. Auch hier ist als DC-Quelle mit hohem Innenwiderstand ein Solargenerator 1 vorgesehen. Diesem ist ein dreiphasiger Wechselrichter 24 mit einem Niederfrequenztransformator (NF-Transformator) 28 nachgeschaltet. Der Wechselrichter ist als Drehstrombrückenschaltung mit sechs Halbleiterschaltern ausgeführt. Parallel zu der DC-Quelle bzw. dem Solargenerator 1 sind der Eingangskondensator 3 und der Widerstandschopper bzw. die Belastung 2 vorgesehen.

Dem Transformator 28 kann drei Abgriffe haben, wie in Fig. 6 veranschaulicht ist. Es kann aber ein Transformator mit beliebig vielen Abgriffen verwendet werden. Im Beispiel nach Fig. 8 sind dem dreiphasigen Wechselrichter 24 drei Drehstromschütze 25, 26 und 27 zugeordnet. Diese haben jeweils drei Schaltkontakte, so dass neun Abgriffe vorhanden sind.

Es kann zwischen drei unterschiedlichen Übersetzungsverhältnissen umgeschaltet werden. Jede Wicklung ist mit verschiedenen Abgriffen versehen, die den unterschiedlichen Schützen 25 bis 27 zugeordnet sind.

Wenn jetzt die Spannung im Kondensator 3 so weit absinkt, dass eine Netzeinspeisung nicht mehr möglich ist, so wird der Widerstandschopper bzw. die Belastung 2 aktiviert. Der Wechselrichter 24 wird gesperrt. Dann wird das Drehstromschütz, das mit den bisher verwendeten Abgriffen verbunden ist, geöffnet. Ein anderes wird geschlossen. Der Wechselrichter 24 wird wieder aktiviert und übernimmt den Leistungsfluss vom Widerstandschopper 2. Wenn der Wechselrichter die volle Leistung übernommen hat, wird der Widerstandschopper wieder gesperrt. Vorteil dieser Ausführungsvariante ist die optimale Anpassung des Trafoübersetzungsverhältnisses an die aktuelle Spannung der Energiequelle. Dadurch steigt der Wirkungsgrad der Anpasseinrichtung. Der Transformator ist in Fig. 8 als YY-Transformator ausgeführt. Es kann aber auch ein DY-Transformator ein YD- oder ein DD-Transformator verwendet werden.

Die Streuinduktivität jeden Transformators kann durch eine oder mehrere zusätzliche Induktivitäten ergänzt werden, um die gewünschte Resonanzfrequenz zu erzielen.

Weiterhin kann die Schaltung so betrieben werden, dass nach einer Umschaltung der Abgriffe eine Freigabe von Wechselrichterpulsen erfolgt, wobei die Eingangsspannung durch die Regelung der Belastung so eingestellt wird, dass sie der momentanen Spannung des eingesetzten Wechselrichterkondensators z. B. 11 multipliziert mit dem Übersetzungsverhältnis des Transformators entspricht.

Möglich ist auch eine Ausführung derart, dass die Pulse des zugeordneten Wechselrichters 4, 14 oder 34 des Resonanzumrichters 15 direkt ohne Anrampen wieder mit vollem Pulsverhältnis eingeschaltet werden, nachdem die Eingangsspannung durch die Regelung der Belastung so eingestellt wurde, dass sie der momentanen Spannung am Wechselrichterkondensator 11 multipliziert mit dem Übersetzungsverhältnis des Transformators entspricht.

Vorteilhaft ist auch, wenn die Schaltungseinrichtung eine regelbare Belastung 102 auch dazu verwendet wird, vor dem Einschalten der Wechselrichter 4, 14, 24 oder 34 die Eingangsspannung auf einen Wert abzusenken, der einen Betrieb der Wechselrichter 4, 14, 24 oder 34 ermöglicht, ohne dass die Anforderungen an die Spannungsfestigkeit der Halbleiterschalter in diesen Wechselrichtern überschritten wird.

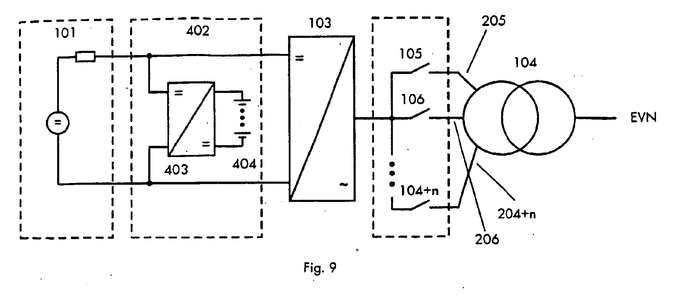

Figur 9 zeigt eine weitere Ausführungsvariante für die regelbare Belastung. Diese kann als Stromrichter 403 ausgeführt sein, der während der Umschaltphase die Energie der Energiequelle nutzt, um einen Energiespeicher 404, z. B. eine Batterie, zu laden. Dadurch geht die Energiequelle während der Umschaltphase nicht verloren.

### Bezugszeichenliste:

- 1.: Solargenerator
- 2.: Belastung
- 3.: Eingangskondensator
- 4.: Vollbrückenschaltung
- 5.: Resonanzkondensator
- 6, 7, 8: Schütze
- 9.: Transformator
- 10.: Gleichrichterschaltung
- 11.: Zwischenkreiskondensator
- 12.: Netzumrichter
- 13.: Netzfilter
- 14.: Wechselrichter
- 15.: Resonanzumrichterschaltung
- 16, 17, 18: Schaltelemente
- 24: Wechselrichter
- 25, 26, 27: Drehstromschütze
- 28: Niederfrequenztransformator
- 31, 32: Kondensatoren
- 34.: Mittelpunktschaltung
- 41, 42: Resonanzkondensatoren
- 43.: Halbbrückenschaltung
- 101: Energiequelle
- 102: Regelbare Belastung
- 103: Wechselrichter
- 104: Transformator
- 105, 106, 104+n: Schaltelemente
- 201, 202, 200+n: Transformatoren
- 204, 205, 206+n: Transformatorabgriffe
- 301, 302, 300+n: Schaltelemente
- 402: Regelbare Belastung ausgeführt als Ladeeinrichtung

## Patentansprüche

1. Schaltungseinrichtung zum Einspeisen elektrischer Energie aus einer Gleichspannungs-Energiequelle (1, 101) mit variabler Quellenspannung in ein elektrisches Energieversorgungsnetz (EVN) und mit einem Transformator mit einer Primär- und Sekundärseite, der eingangsseitig der Energiequelle und ausgangsseitig dem Energieversorgungsnetz zugeordnet ist, wobei mindestens zwei Transformatorabgriffe (206, 205, 204 + n) des Transformators (104, 9, 28) oder mehrerer Transformatoren (201,202, 200+n) vorhanden sind, wobei die Transformatorabgriffe (206, 205, 204 + n) mit Schaltelementen (105, 106, 104+n; 301, 302, 300+n 25, 26, 27, 6, 7, 8, 16, 17, 18) umschaltbar ausgebildet sind, um das Transformator-Übersetzungsverhältnis zu verändern, sowie dem Transformator oder den Transformatoren ein Wechselrichter (103, 4, 14, 34, 24) vorgeschaltet ist, der Halbleiterschalter umfasst, wobei eine regelbare Belastung (2, 102) auf der Primärseite vorhanden ist, um die Spannung der Energiequelle (1, 101) zu begrenzen, während von einem Transformatorabgriff auf einen anderen Transformatorabgriff umgeschaltet wird, und wobei die Einrichtung derart ausgeführt ist, dass durch den oder durch die Transformatoren (201, 202, 200+n) eine Spannungsanpassung zwischen der Energiequelle (1, 101) und dem Versorgungsnetz (EVN) erfolgt,
**dadurch gekennzeichnet,**
**dass** die Einrichtung derart ausgeführt ist, dass durch den oder durch die Transformatoren (201,202, 200+n) eine grobe
Spannungsanpassung zwischen der Energiequelle (1, 101) und dem Versorgungsnetz (EVN) erfolgt und eine Feinanpassung durch den Wechselrichter (103, 4, 14, 34, 24) erfolgt, und
**dass** die regelbare Belastung (2, 102) DC-seitig angeordnet und als Widerstandschopper oder Bremschopper ausgeführt ist.

2. Schaltungseinrichtung zum Einspeisen elektrischer Energie aus einer Gleichspannungs-Energiequelle (1, 101) mit variabler Quellenspannung in ein elektrisches Energieversorgungsnetz (EVN) und mit einem Transformator mit einer Primär- und Sekundärseite, der eingangsseitig der Energiequelle und ausgangsseitig dem Energieversorgungsnetz zugeordnet ist, wobei mindestens zwei Transformatorabgriffe (206, 205, 204 + n) des Transformators (104, 9, 28) oder mehrerer Transformatoren (201,202, 200+n) vorhanden sind, wobei die Transformatorabgriffe (206, 205, 204 + n) mit Schaltelementen (105, 106, 104+n; 301, 302, 300+n; 25, 26, 27; 6, 7, 8; 16, 17, 18) umschaltbar ausgebildet sind, um das Transformator-Übersetzungsverhältnis zu verändern, sowie dem Transformator oder den Transformatoren ein Wechselrichter (103, 4, 14, 34, 24) vorgeschaltet ist, der Halbleiterschalter umfasst, wobei eine regelbare Belastung (2, 102) auf der Primärseite vorhanden ist, um die Spannung der Energiequelle (1, 101) zu begrenzen, während von einem Transformatorabgriff auf einen anderen Transformatorabgriff umgeschaltet wird, und wobei die Einrichtung derart ausgeführt ist, dass durch den oder durch die Transformatoren (201, 202, 200+n) eine Spannungsanpassung zwischen der Energiequelle (1,101) und dem Versorgungsnetz (EVN) erfolgt,
**dadurch gekennzeichnet,**
**dass** die Einrichtung derart ausgeführt ist, dass durch den oder durch die Transformatoren (201,202, 200+n) eine grobe
Spannungsanpassung zwischen der Energiequelle (1, 101) und dem Versorgungsnetz (EVN) erfolgt und eine Feinanpassung durch den Wechselrichter (103, 14, 34, 24) erfolgt, und
**dass** die regelbare Belastung (402) DC-seitig angeordnet und als Stromrichter (403) ausgeführt ist, der einen Energiespeicher (404) lädt.

3. Schaltungseinrichtung nach einem der vorhergehenden Ansprüche,
**dadurch gekennzeichnet,**
**dass** jeder Transformator (104, 9, 28; 201, 202, 200 +n) als Einphasentransformator, als Zweiphasentransformator, Dreiphasentransformator oder als Mehrphasentransformator ausgeführt ist.

4. Schaltungseinrichtung nach einem der vorhergehenden Ansprüche,
**dadurch gekennzeichnet,**
**dass** zur Umschaltung zwischen den verschiedenen Transformatorabgriffen (206, 205, 204 + n) des Transformators (104, 9, 28) oder zwischen den einzelnen Transformatorabgriffen der Transformatoren (201, 202, 200 +n) Relais, Schütze, Schalter, Trenner oder Halbleiterschalter vorgesehen sind.

5. Schaltungseinrichtung nach einem der vorhergehenden Ansprüche,
**dadurch gekennzeichnet,**
**dass** die Energiequelle (101) ein Solargenerator, eine Brennstoffzelle, eine Batterie, ein Windkraftwerk mit permanentmagnetischem Generator, eine Verbrennungsmaschine mit permanentmagnetischem Generator oder ein Wasserkraftwerk mit permanentmagnetischem Generator ist.

6. Schaltungseinrichtung nach einem der vorhergehenden Ansprüche,
**dadurch gekennzeichnet,**
**dass** das Energieversorgungsnetz (EVN) ein öffentliches Energieversorgungsnetz ist oder ein Inselnetz mit einem oder mehreren Verbrauchern ist.

7. Schaltungseinrichtung nach einem der vorhergehenden Ansprüche,
**dadurch gekennzeichnet,**
**dass** jeder Transformator ein NF Transformator ist, dessen Betriebsfrequenz gleich der Frequenz des Energieversorgungsnetzes ist.

8. Schattungseinrichtung nach einem der Ansprüche 1 bis 7,
**dadurch gekennzeichnet,**
**dass** jeder Transformator als HF-Transformator ausgeführt ist und dessen Frequenz größer als die Frequenz des Energieversorgungsnetzes ist.

9. Schaltungseinrichtung nach einem der vorhergehenden Ansprüche,
**dadurch gekennzeichnet,**
**dass** dem Transformator oder den Transformatoren ein Wechselrichter (103, 14, 34, 24) vorgeschaltet ist, der MOS Transistoren, IGBTs, GTOs oder Thyristoren umfasst.

10. Schaltungseinrichtung nach Anspruch 9,
**dadurch gekennzeichnet,**
**dass** der Wechselrichter (103, 14, 34, 24) ein einphasiger oder ein dreiphasiger Wechselrichter ist.

11. Schaltungseinrichtung nach Anspruch 9 oder 10,
**dadurch gekennzeichnet,**
**dass** der Wechselrichter (4) mindestens einen Resonanzkondensator (5; 31, 32; 41, 42) sowie einen als HF-Transformator (9) ausgeführten Transformator und eine Gleichrichterschaltung (10, 43) umfasst und einen Resonanzumrichter (15) bildet, wobei die Eigenfrequenz, die der Resonanzkondensator mit der Streuinduktivität des Transformators (9) bildet, größer oder kleiner der Schaltfrequenz des Wechselrichters ist.

12. Schaltungseinrichtung nach Anspruch 11,
**dadurch gekennzeichnet,**
**dass** ein oder mehrere Resonanzkondensatoren (5; 41, 42) am Transformator (9) sekundärseitig angeordnet sind.

13. Schaltungseinrichtung nach Anspruch 11,
**dadurch gekennzeichnet,**
**dass** ein oder mehrere Resonanzkondensatoren (5) am Transformator (9) primärseitig angeordnet sind.

14. Schaltungseinrichtung nach einem der Ansprüche 9 bis 11,
**dadurch gekennzeichnet,**
**dass** der Wechselrichter (14) eine Halbbrückenschaltung aufweist.

15. Schaltungseinrichtung nach einem der Ansprüche 9 bis 11,
**dadurch gekennzeichnet,**
**dass** der Wechselrichter (14) eine Vollbrückenschaltung aufweist.

16. Schaltungseinrichtung nach einem der vorhergehenden Ansprüche,
**dadurch gekennzeichnet,**
**dass** die Streuinduktivität jeden Transformators durch eine oder mehrere zusätzliche Induktivitäten ergänzt wird, um die gewünschte Resonanzfrequenz zu erzielen.

17. Schaltungseinrichtung nach einem der vorhergehenden Ansprüche,
**dadurch gekennzeichnet,**
**dass** die Schaltelemente zur Umschaltung zwischen den einzelnen Transformatorabgriffen oder zwischen den einzelnen Transformatoren auf der Primärseite des Transformators oder der Transformatoren angeordnet sind.

18. Schaltungseinrichtung nach einem der vorhergehenden Ansprüche,
**dadurch gekennzeichnet,**
**dass** die Schaltelemente zur Umschaltung zwischen den einzelnen Transformatorabgriffen oder zwischen den einzelnen Transformatoren auf der Sekundärseite des Transformators oder der Transformatoren angeordnet sind.

19. Schaltungseinrichtung nach einem der Ansprüche 9 bis 16,
**gekennzeichnet durch**
eine Ausführung derart, dass nach einer Umschaltung und vor einer Freigabe von Wechselrichterpulsen, die Eingangspannung **durch** die Regelung der Belastung so eingestellt wird, dass sie der momentanen Spannung eines Wechselrichterkondensators (11) multipliziert mit dem Übersetzungsverhältnis des Transformators entspricht.

20. Schaltungseinrichtung nach Anspruch 16,
**gekennzeichnet durch**
eine Ausführung derart, dass die Pulse des zugeordneten Wechselrichters (4, 14 oder 34) des Resonanzumrichters (15) direkt ohne Anrampen wieder mit vollem Pulsverhältnis eingeschaltet werden, nachdem die Eingangsspannung **durch** die Regelung der Belastung so eingestellt wurde, dass sie der momentanen Spannung am Wechselrichterkondensator (11) multipliziert mit dem Übersetzungsverhältnis des Transformators entspricht.

21. Schaltungseinrichtung nach einem der vorhergehenden Ansprüche,
**gekennzeichnet durch**
eine Ausführung derart, dass die Schaltungseinrichtung für eine regelbare Belastung (102) auch dazu verwendet wird, vor dem Einschalten der Wechselrichter (4, 14, 24 oder 34) die Eingangsspannung auf einen Wert abzusenken, der einen Betrieb der Wechselrichter (4, 14, 24 oder 34) ermöglicht, ohne dass die Anforderungen an die Spannungsfestigkeit der Halbleiterschalter in diesen Wechselrichtern überschritten werden.

## Claims

1. A circuit array for feeding electric power from a direct voltage power source (1, 101) with variable source voltage into an electric utility grid (EVN) and with a transformer with a primary and a secondary side, which is associated with the power source on the input side and with the utility grid on the output side, at least two transformer taps (206, 205, 204 + n) of the transformer (104, 9, 28) or of several transformers (201, 202, 200 + n) being provided, said transformer taps (206, 205, 204 + n) being configured to be switchable with switching elements (105, 106, 104 + n; 301, 302, 300 + n, 25, 26, 27, 6, 7, 8, 16, 17, 18) in order to change the transformer transmission ratio and an inverter (103, 4, 14, 34, 24) incorporating semiconductor switches being mounted upstream of said transformer or of said transformers, a controllable load (2, 102) being provided on the primary side in order to limit the voltage of the power source (1, 101) during switching from one transformer tap to another transformer tap and said array being configured such that a voltage adjustment occurs between the power source (1, 101) and the utility grid (EVN) through the transformer or through the transformers (201, 202, 200 + n),
**characterized in**
**that** the array is configured such that a rough voltage adjustment occurs between the power source (1, 101) and the utility grid (EVN) through the transformer or through the transformers (201, 202, 200 + n) and that a fine adjustment occurs through the inverter (103, 4, 14, 34, 24) and
**that** the controllable load (2, 102) is disposed on the DC side and is configured to be a resistance chopper or a brake chopper.

2. A circuit array for feeding electric power from a direct voltage power source (1, 101) with variable source voltage into an electric utility grid (EVN) and with a transformer with a primary and a secondary side, which is associated with the power source on the input side and with the utility grid on the output side, at least two transformer taps (206, 205, 204 + n) of the transformer (104, 9, 28) or of several transformers (201, 202, 200 + n) being provided, said transformer taps (206, 205, 204 + n) being configured to be switchable with switching elements (105, 106, 104 + n; 301, 302, 300 + n, 25, 26, 27; 6, 7, 8; 16, 17, 18) in order to change the transformer transmission ratio and an inverter (103, 4, 14, 34, 24) incorporating semiconductor switches being mounted upstream of said transformer or of said transformers, a controllable load (2, 102) being provided on the primary side in order to limit the voltage of the power source (1, 101) during switching from one transformer tap to another transformer tap and said array being configured such that a voltage adjustment occurs between the power source (1,101) and the utility grid (EVN) through the transformer or through the transformers (201, 202, 200 + n),
**characterized in**
**that** the array is configured such that a rough voltage adjustment occurs between the power source (1, 101) and the utility grid (EVN) through the transformer or through the transformers (201, 202, 200 + n) and that a fine adjustment occurs through the inverter (103, 14, 34, 24) and
**that** the controllable load (402) is disposed on the DC side and is configured to be a rectifier (403) that charges a power accumulator (404).

3. The circuit array as set forth in any one of the previous claims,
**characterized in**
**that** each transformer (104, 9, 28; 201, 202, 200 + n) is configured to be a one-phase transformer, a two-phase transformer, a three-phase transformer or a multiple-phase transformer.

4. The circuit array as set forth in any one of the previous claims,
**characterized in**
**that** relays, contactors, switches, disconnectors or semiconductor switches are provided in order to switch between the different transformer taps (206, 205, 204 + n) of the transformer (104, 9, 28) or between the different transformer taps of the transformers (201, 202, 200 + n).

5. The circuit array as set forth in any one of the previous claims,
**characterized in**
**that** the power source (101) is a solar generator, a fuel cell, a battery, a wind power station with permanent-magnet generator, a combustion engine with permanent-magnet generator or a hydropower station with permanent-magnet generator.

6. The circuit array as set forth in any one of the previous claims,
**characterized in**
**that** the utility grid (EVN) is a public utility grid or an island network with one or several consumers.

7. The circuit array as set forth in any one of the previous claims,
**characterized in**
**that** each transformer is an LF transformer the operating frequency of which equals the frequency of the utility grid.

8. The circuit array as set forth in any one of the claims 1 through 7,
**characterized in**
**that** each transformer is configured to be a HF transformer the frequency of which is higher than the frequency of the utility grid.

9. The circuit array as set forth in any one of the previous claims,
**characterized in**
**that** an inverter (103, 14, 34, 34) is mounted upstream of the transformer or of the transformers, said inverter incorporating MOS transistors, IBGTs, GTOs or thyristors.

10. The circuit array as set forth in claim 9,
**characterized in**
**that** the inverter (103, 14, 34, 24) is a one-phase or a three-phase inverter.

11. The circuit array as set forth in any claim 9 or 10,
**characterized in**
**that** the inverter (4) incorporates at least one resonance capacitor (5; 31, 32; 41, 42) as well as a transformer implemented as a HF transformer (9) and a rectifier circuit (10, 43) and forms a resonance converter (15), the eigenfrequency the resonance capacitor forms with the leakage inductance of the transformer (9) being higher or lower than the switch frequency of the inverter.

12. The circuit array as set forth in claim 11,
**characterized in**
**that** one or more resonance capacitors (5; 41, 42) are disposed on the secondary side of the transformer (9).

13. The circuit array as set forth in claim 11,
**characterized in**
**that** one or more resonance capacitors (5) are disposed on the primary side of the transformer (9).

14. The circuit array as set forth in any one of the claims 9 through 11,
**characterized in**
**that** the inverter (14) comprises a half-bridge circuit.

15. The circuit array as set forth in any one of the claims 9 through 11,
**characterized in**
**that** the inverter (14) comprises a full bridge circuit.

16. The circuit array as set forth in any one of the previous claims,
**characterized in**
**that** the leakage inductance of each transformer is complemented through one or more additional inductances in order to achieve the desired resonance frequency.

17. The circuit array as set forth in any one of the previous claims,
**characterized in**
**that** the switching elements for switching between the discrete transformer taps or between the different transformers are disposed on the primary side of the transformer or of the transformers.

18. The circuit array as set forth in any one of the previous claims,
**characterized in**
**that** the switching elements for switching between the discrete transformer taps or between the different transformers are disposed on the secondary side of the transformer or of the transformers.

19. The circuit array as set forth in any one of the claims 9 through 16,
**characterized by**
an implementation such that, after switching and prior to releasing inverter pulses, the input voltage is set by controlling the load in such a manner that it corresponds to the momentaneous voltage of an inverter capacitor (11) multiplied by the transmission ratio of the transformer.

20. The circuit array as set forth in claim 16,
**characterized by**
an implementation such that the pulses of the associated inverter (4, 14 or 34) of the resonance inverter (15) are switched on again directly with full pulse ratio without ramping after the input voltage has been set in such a manner by controlling the load that it corresponds to the momentaneous voltage at the inverter capacitor (11) multiplied by the transmission ratio of the transformer.

21. The circuit array as set forth in any one of the previous claims,
**characterized by**
an implementation such that the switching device also uses a controllable load (102) to lower the input voltage to a value allowing for operation of the inverters (4, 14, 24 or 34) prior to switching said inverters (4, 14, 24 or 34) on, without the demands placed on the voltage stability of the semiconductor switches in these inverters being exceeded.

## Revendications

1. Montage de circuit pour alimenter un réseau de distribution électrique (EVN) en énergie électrique provenant d'une source d'énergie à tension continue (1, 101) avec une tension de source variable et avec un transformateur avec un côté primaire et un côté secondaire associé à la source d'énergie côté entrée et au réseau de distribution électrique côté sortie, au moins deux prises de prélèvement (206, 205, 204 + n) du transformateur (104, 9, 28) ou de plusieurs transformateurs (201, 202, 200 + n) étant prévues, les prises de prélèvement (206, 205, 204 + n) étant réalisées de manière à être commutables à l'aide d'éléments de commutation (105, 106, 104 + n; 301, 302, 300 + n, 25, 26, 27, 6, 7, 8, 16, 17, 18) afin de modifier le rapport de transmission du transformateur, un convertisseur continu-alternatif (103, 4, 14, 34, 24) comprenant des commutateurs à semi-conducteurs étant monté en amont du transformateur ou des transformateurs, une charge ajustable (2, 102) étant prévue côté primaire afin de limiter la tension de la source d'énergie (1, 101) tandis que l'on commute d'une prise de prélèvement à une autre prise de prélèvement de transformateur et le montage étant réalisé de telle sorte que la tension entre la source d'énergie (1, 101) et le réseau de distribution électrique (EVN) est ajustée par le ou les transformateurs (201, 202, 200 + n),
**caractérisé en ce**
**que** le montage est réalisé de telle sorte que la tension est ajustée grossièrement entre la source d'énergie (1, 101) et le réseau de distribution électrique (EVN) par le ou les transformateurs (201, 202, 200 + n) et qu'elle est ajustée finement par le convertisseur continu-alternatif (103, 4, 14, 34, 24) et que la charge réglable (2, 102) est disposée côté CC et est réalisée sous forme de hacheur de résistance ou de hacheur de freinage.

2. Montage de circuit pour alimenter un réseau de distribution électrique (EVN) en énergie électrique provenant d'une source d'énergie à tension continue (1, 101) avec une tension de source variable et avec un transformateur avec un côté primaire et un côté secondaire associé à la source d'énergie côté entrée et au réseau de distribution électrique côté sortie, au moins deux prises de prélèvement (206, 205, 204 + n) du transformateur (104, 9, 28) ou de plusieurs transformateurs (201, 202, 200 + n) étant prévues, les prises de prélèvement (206, 205, 204 + n) étant réalisées de manière à être commutables à l'aide d'éléments de commutation (105, 106, 104 + n; 301, 302, 300 + n, 25, 26, 27, 6, 7, 8,16,17,18) afin de modifier le rapport de transmission du transformateur, un convertisseur continu-alternatif (103, 4, 14, 34, 24) comprenant des commutateurs à semi-conducteurs étant monté en amont du transformateur ou des transformateurs, une charge ajustable (2, 102) étant prévue côté primaire afin de limiter la tension de la source d'énergie (1, 101) tandis que l'on commute d'une prise de prélèvement à une autre prise de prélèvement de transformateur et le montage étant réalisé de telle sorte que la tension entre la source d'énergie (1, 101) et le réseau de distribution électrique (EVN) est ajustée par le ou les transformateurs (201, 202, 200 + n),
**caractérisé en ce**
**que** le montage est réalisé de telle sorte que la tension est ajustée grossièrement entre la source d'énergie (1, 101) et le réseau de distribution électrique (EVN) par le ou les transformateurs (201, 202, 200 + n) et qu'elle est ajustée finement par le convertisseur continu-alternatif (103, 14, 34, 24) et que la charge réglable (402) est disposée côté CC et est réalisée sous forme de redresseur (403) qui charge un accumulateur d'énergie (404).

3. Montage de circuit selon l'une quelconque des revendications précédentes,
**caractérisé en ce**
**que** chaque transformateur (104, 9, 28; 201, 202, 200 + n) est réalisé sous forme de transformateur monophase, de transformateur biphase, de transformateur triphase ou de transformateur à phases multiples.

4. Montage de circuit selon l'une quelconque des revendications précédentes,
**caractérisé en ce**
**que** des relais, des contacteurs, des commutateurs, des interrupteurs ou des commutateurs à semi-conducteur sont prévus pour commuter entre les différentes prises de prélèvement (206, 205, 204 + n) du transformateur (104, 9, 28) ou entre les différentes prises de prélèvement des transformateurs (201, 202, 200 + n).

5. Montage de circuit selon l'une quelconque des revendications précédentes,
**caractérisé en ce**
**que** la source d'énergie (101) est un générateur solaire, une cellule électrochimique, une batterie, une centrale éolienne avec un générateur à aimant permanent, un moteur à combustion interne avec un générateur à aimant permanent ou une centrale hydraulique avec un générateur à aimant permanent.

6. Montage de circuit selon l'une quelconque des revendications précédentes,
**caractérisé en ce**
**que** le réseau de distribution électrique (EVN) est un réseau public ou un réseau isolé avec un ou plusieurs consommateurs.

7. Montage de circuit selon l'une quelconque des revendications précédentes,
**caractérisé en ce**
**que** chaque transformateur est un transformateur basse fréquence dont la fréquence de service est égale à la fréquence du réseau de distribution électrique.

8. Montage de circuit selon l'une quelconque des revendications 1 à 7,
**caractérisé en ce**
**que** chaque transformateur est réalisé sous forme de transformateur haute fréquence dont la fréquence est supérieure à la fréquence du réseau de distribution électrique.

9. Montage de circuit selon l'une quelconque des revendications précédentes,
**caractérisé en ce**
**qu'**un convertisseur continu-alternatif (103, 14, 34, 24) comprenant des transistors MOS, des IGBTs, des GTOs ou des thyristors est monté en amont du transformateur ou des transformateurs.

10. Montage de circuit selon la revendication 9,
**caractérisé en ce**
**que** le convertisseur continu-alternatif (103, 14, 34, 24) est un convertisseur continu-alternatif monophase ou triphase.

11. Montage de circuit selon la revendication 9 ou 10,
**caractérisé en ce**
**que** le convertisseur continu-alternatif (4) comprend au moins un condensateur à résonance (5; 31, 32; 41, 42) ainsi qu'un transformateur réalisé sous forme de transformateur haute fréquence (9) et un circuit redresseur (10, 43) et qu'il forme un convertisseur de fréquence à résonance (15), la fréquence propre que forme le condensateur à résonance avec l'inductance de fuite du transformateur (9) étant supérieure ou inférieure à la fréquence de commutation du convertisseur continu-alternatif.

12. Montage de circuit selon la revendication 11,
**caractérisé en ce**
**qu'**un ou plusieurs condensateurs à résonance (5 ; 41, 42) sont disposés sur le côté secondaire du transformateur (9).

13. Montage de circuit selon la revendication 11,
**caractérisé en ce**
**qu'**un ou plusieurs condensateurs à résonance (5) sont disposés sur le côté primaire du transformateur (9).

14. Montage de circuit selon l'une quelconque des revendications 9 à 11,
**caractérisé en ce**
**que** le convertisseur continu-alternatif (14) comporte un circuit demi-pont.

15. Montage de circuit selon l'une quelconque des revendications 9 à 11,
**caractérisé en ce**
**que** le convertisseur continu-alternatif (14) comporte un circuit pont.

16. Montage de circuit selon l'une quelconque des revendications précédentes,
**caractérisé en ce**
**que** l'inductance de fuite de chacun des transformateurs est complétée par une ou plusieurs inductances supplémentaires afin d'obtenir la fréquence de résonance souhaitée.

17. Montage de circuit selon l'une quelconque des revendications précédentes,
**caractérisé en ce**
**que** les éléments de commutation pour commuter entre les différentes prises de prélèvement du transformateur ou entre les différents transformateurs sont disposés côté primaire du transformateur ou des transformateurs.

18. Montage de circuit selon l'une quelconque des revendications précédentes,
**caractérisé en ce**
**que** les éléments de commutation pour commuter entre les différentes prises de prélèvement du transformateur ou entre les différents transformateurs sont disposés côté secondaire du transformateur ou des transformateurs.

19. Montage de circuit selon l'une quelconque des revendications 9 à 16,
**caractérisé par**
une réalisation telle que la tension d'entrée est ajustée par le réglage de la charge après une commutation et avant la libération d'impulsions du convertisseur continu-alternatif de telle sorte qu'elle correspond à la tension momentanée d'un condensateur (11) de convertisseur continu-alternatif, multipliée par le rapport de transmission du transformateur.

20. Montage de circuit selon la revendication 16,
**caractérisé par**
une réalisation telle que les impulsions du convertisseur continu-alternatif (4, 14 ou 34) associé du convertisseur de fréquence à résonance (15) sont mis en marche directement sans rampage avec le rapport d'impulsion maximum après que la tension d'entrée a été réglée par le règlement de la charge de telle sorte qu'elle correspond à la tension momentanée au condensateur (11) de convertisseur continu-alternatif, multipliée par le rapport de transmission du transformateur.

21. Montage de circuit selon l'une quelconque des revendications précédentes,
**caractérisé par**
une réalisation telle que le montage de circuit utilise aussi une charge réglable (102) pour faire baisser la tension d'entrée avant la mise en marche du convertisseur continu-alternatif (4, 14, 24 ou 34) jusqu'à une valeur permettant le fonctionnement des convertisseurs continu-alternatif (4, 14, 24 ou 34) sans que les exigences quant à la stabilité de la tension des commutateurs à semiconducteurs dans ces convertisseurs continu-alternatif soient dépassées.
